# EUROPÄISCHE PATENTSCHRIFT

(11) **EP 0 684 118 B1**
(45) Veröffentlichungstag und Bekanntmachung des Hinweises auf die Patenterteilung: **26.01.2000**
(21) Anmeldenummer: 95107634.8
(22) Anmeldetag: 19.05.1995
(51) Int. Cl.: B29C 35/00

(54) **Verfahren zum Temperieren der beiden Werkzeughälften eines Formwerkzeuges zum Tiefziehen einer Kunststoffolie und Vorrichtung zur Durchführung des Verfahrens**
Method and apparatus of tempering both mould parts of a deep drawing machine of plastic films
Procédé et dispositif de conditionnement en température d'un moule pour machine d'emboutissage de film plastique

(30) Priorität: 24.05.1994 DE 4418064
(43) Veröffentlichungstag der Anmeldung: 29.11.1995
(73) Patentinhaber: Adolf Illig Maschinenbau GmbH & Co, D-74081 Heilbronn (DE)
(72) Erfinder: Kiefer, Günther, D-74193 Schwaigern (DE)

(56) Entgegenhaltungen:
- DE-A- 3 743 809
- DE-C- 3 135 206
- US-A- 4 354 812
- US-A- 4 699 676

## Beschreibung

Die Erfindung betrifft ein Verfahren zum Temperieren der beiden Werkzeughälften eines Formwerkzeuges nach der Gattung des Hauptanspruches sowie eine Vorrichtung zur Durchführung des Verfahrens.

Aus der DE 3 135 206 C1 ist es bekannt, die beiden Werkzeughälften eines Form/Stanzwerkzeuges in der Weise zu kühlen, daß ein Kühlwasserstrom so aufgeteilt wird, daß die Temperaturdifferenz zwischen den beiden Werkzeughälften möglichst gering bzw. auf einer vorgegebenen Differenz bleibt. Dieses Verfahren bringt während der Produktion von Kunststoffteilen keine Probleme, wohl aber beim Start der Maschine und bei Unterbrechungen, z. B. bei Pausen oder Störungen.

Beim Einschalten der Maschine und nach längeren Pausen weist das Werkzeug Raumtemperatur auf. Läuft bereits während des Anheizens der Maschine Kühlwasser durch das Werkzeug, wird dieses kälter als später unter Produktionsbedingungen. Stellt man die Maschine während der Produktion ab, ergeben sich wieder ändernde Temperaturverhältnisse, je nachdem, ob das Kühlwasser abgestellt wird oder nicht. Fließt Kühlwasser während einer solchen Unterbrechung, werden die Werkzeughälften kälter als während der Produktion. Stellt man die Kühlmittelzufuhr ab, werden beide Werkzeughälften eine unterschiedliche Temperatur annehmen, da beide Hälften unterschiedliche Mengen an Kühlwasser beinhalten und ein unterschiedlicher Wärmeaustausch mit der Umgebungsluft stattfindet (z.B. unterschiedliche Oberflächen, Material etc.). Die Werkzeughälften werden auf Dauer Raumtemperatur annehmen.

Temperaturabweichungen von der Produktionstemperatur haben beim Anfahren des Werkzeuges unterschiedliche Qualität des Produktes zur Folge. Zu große Temperaturunterschiede und als Folge unterschiedliche Wärmeausdehnungen haben Verschleißprobleme oder eine Werkzeugzerstörung zur Folge.

Der Erfindung liegt die Aufgabe zugrunde, das Verfahren so zu gestalten, daß bei Produktionsunterbrechungen keine zu großen Temperaturunterschiede zwischen den beiden Werkzeughälften auftreten. In Weiterbildung der Erfindung wird dieses Verfahren noch dahingehend verbessert, daß sowohl beim Anfahren des Werkzeuges nach einer längeren Pause als auch nach kurzfristigen Unterbrechungen die beiden Werkzeughälften die Temperatur aufweisen, die sie später in der Produktion annehmen.

Zur Lösung der Aufgabe werden die kennzeichnenden Merkmale des Patentanspruches 1 und des Patentanspruches 5 vorgeschlagen. Die Unteransprüche betreffen vorteilhafte Weiterbildungen des Verfahrens bzw. der Vorrichtung zur Durchführung des Verfahrens.

Ein Ausführungsbeispiel der Erfindung ist anhand der schematischen Zeichnungen näher beschrieben. Es zeigt:

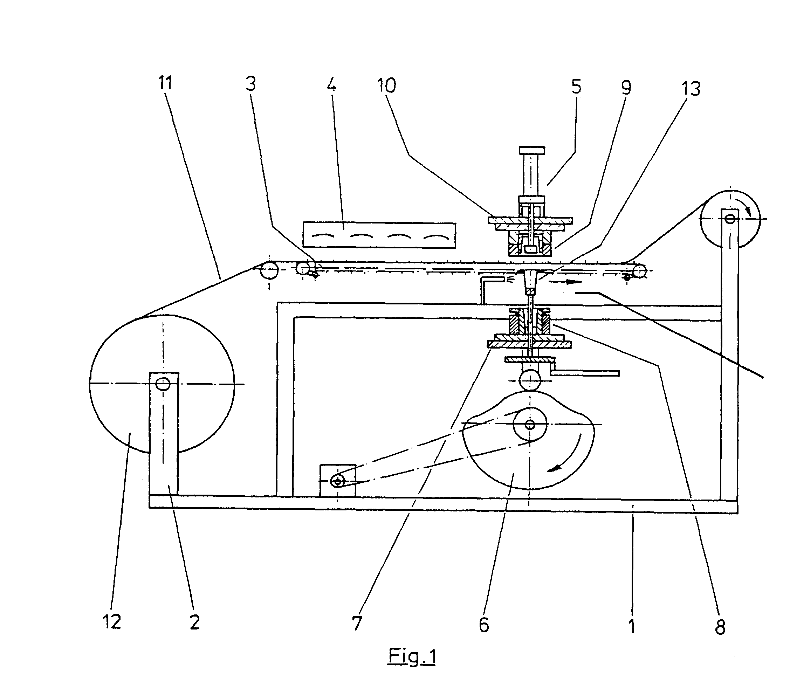

- Figur 1 -: eine Längsdarstellung einer Thermoformmaschine, in die die Vorrichtung zur Durchführung des Verfahrens eingebaut wird.
- Figur 2 -: Einen Querschnitt durch das Formwerkzeug.
- Figur 3 -: Ein schematisches Blockschaltbild von Kühlmittelzuführung und Regelung.

Eine Thermoformmaschine zum Einbau der Vorrichtung mit Formwerkzeug zur Durchführung des erfindungsgemäßen Verfahrens besteht aus den Hauptteilen Gestell 1, Rollenaufnahme 2, Transport 3, Heizung 4, Form/Stanzstation 5 und Antrieb 6 für den höhenbeweglichen Tisch 7, der das Unterteil 8 des Werkzeuges aufnimmt. Das Oberteil 9 wird an der starren Querbrücke 10 befestigt.

Verfahrensmäßig wird eine Folienbahn 11 von der Rolle 12 abgezogen, erwärmt und in der Form/Stanzstation 5 durch Differenzdruck tiefgezogen. Die ausgestanzten Becher 13 werden austransportiert, das Abfallgitter aufgewickelt oder zermahlen.

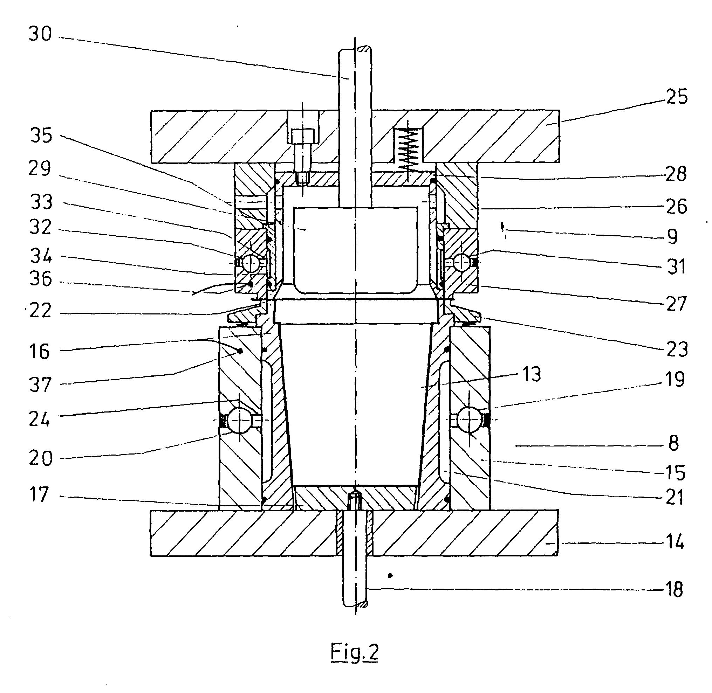

Figur 2 zeigt einen Querschnitt durch ein einreihiges Werkzeug zur Herstellung der Becher 13. Das Unterteil 8 weist auf eine Grundplatte 14, einen Kühlblock 15 mit beispielsweise acht Formeinsätzen 16 und je Formnest einen Boden 17 auf einer Stange 18. Am oberen Ende jedes Formeinsatzes 16 verläuft die Schnittkante 22, ein Abstreifer 23 kann ringsum angeordnet sein. Zur Kühlung der Formeinsätze 16 sind Bohrungen, 19, 20 im Kühlblock 15 vorgesehen und zwischen den Wandungen von Kühlblock 15 und Formeinsatz 16 ist eine ringsum verlaufende Kammer 21 ausgespart, in die Querbohrungen 24 münden. Zum Beispiel kann die Bohrung 19 der Zuleitung von Kühlmittel dienen, die Bohrung 20 der Ableitung. Es ist aber auch eine Durchströmung von allen Kammern 21 nacheinander in einer Reihe möglich.

Das Oberteil 9 setzt sich zusammen aus der Kopfplatte 25, der Zwischenplatte 26, der Matrize 27, Abstreifern 28 und gegebenenfalls Streckhelfern 29 an Stangen 30. Eine Bohrung 31 zur Zufuhr und eine Bohrung 32 zur Abfuhr von Kühlmitteln verlaufen in der Matrize 27, Querbohrungen 33 führen zu Ringräumen 34, die in eingesetzte Buchsen 35 eingearbeitet sind. Auf diese Weise wird eine besonders innige Kühlung der Niederhalter 28 erzielt. Temperaturfühler 36, 37, z. B. Thermoelemente, sind im Oberteil 9 und Unterteil 8, vorzugsweise in der Matrize 27 bzw. im Kühlblock 15 vorgesehen.

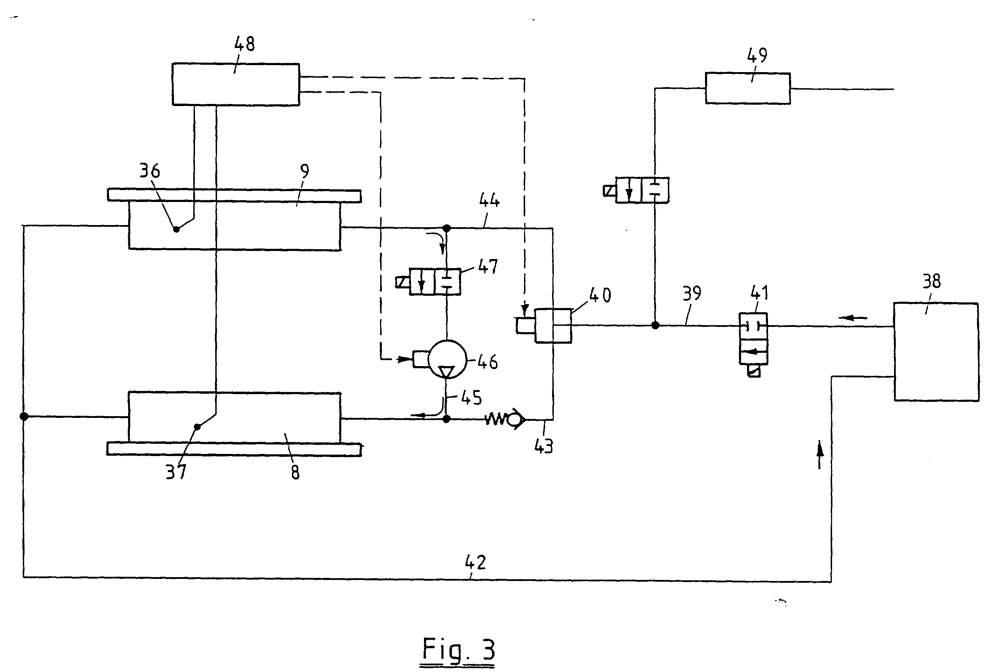

Figur 3 zeigt den Kühlwasserplan zur Kühlung der beiden Werkzeughälften 8, 9. Ein Temperiergerät 38 führt einen Kühlwasserstrom über eine Leitung 39 zu einem Verteilerventil 40, das den Kühlwasserstrom über Leitungen 43, 44 so auf Oberteil 9 und Unterteil 8 aufteilt, daß beide Werkzeughälften 8, 9 annähernd dieselbe Temperatur oder eine gewünschte Temperaturdifferenz während der Produktion annehmen. Ein Absperrventil 41 ist in die Leitung 39 eingebaut. Das Kühlwasser beider Werkzeughälften 8, 9 strömt über die Leitung 42 wieder zurück zum Kühlgerät 38.

Zwischen den Leitungen 43, 44 zu den beiden Werkzeughälften 8, 9 ist in Form eines Bypasses eine Verbindungsleitung 45 vorgesehen. In dieser Leitung 45 sind eine Umwälzpumpe 46 und ein Ventil 47 eingebaut.

Das Verfahren zum Regeln der Temperatur der beiden Werkzeughälften 8, 9 läuft wie folgt ab:

Während der Produktion regelt die Steuerung 48 die von den Temperaturfühlern 36, 37 gemeldete Temperatur entsprechend den Vorgaben durch Aufteilung des Kühlwasserstromes. Tritt eine Unterbrechung der Produktion auf, wird das Absperrventil 41 geschlossen, das Ventil 47 geöffnet und die Umwälzpumpe 46 eingeschaltet. Die Einstellung des Verteilerventils 40 wird nicht mehr verändert während der Unterbrechung. Dies bedeutet, daß Kühlwasser zwischen Oberteil 9 und Unterteil 8 umgepumpt wird. Dies bietet die beste Gewähr, daß beide Werkzeughälften 8, 9 eine Temperatur annehmen bzw. beibehalten, die keine große Temperaturdifferenz aufweisen. Es findet außerdem keine zu große Temperaturabsenkung gegenüber der Produktion statt, wie es der Fall wäre, würde man bei stillstehender Maschine die Kühlmittelzufuhr beibehalten.

Sollte die Unterbrechung sehr lange dauern, so nähern sich die Temperaturen der beiden Werkzeughälften 8, 9 der Raumtemperatur. Liegt die Produktionstemperatur tiefer als die Raumtemperatur, wird als Weiterbildung der Erfindung vorgeschlagen, bei einer entsprechenden Abweichung für eine kurze zeit das Ventil 41 zu öffnen und kälteres Wasser den beiden Werkezughälften 9, 10 zuzuführen und dann wieder umzupumpen. Liegt die Produktionstemperatur höher als die sich bei der Umwälzung ergebenden Werkzeugtemperaturen, wird über ein Heizgerät 49 erwärmtes Wasser den beiden Werkzeughälften 8, 9 kurzzeitig zugeführt und dieses dann über die Umwälzpumpe 46 umgewälzt.

Auf diese Weise kann auch bei Unterbrechungen die Temperatur der beiden Werkzeughälften 8, 9 auf der Temperatur gehalten werden, die sich bei der Produktion ergibt.

Auch zum Anfahren des Werkzeuges von Raumtemperatur aus kann dieses Verfahren genutzt werden. Eine in der Steuerung 48 vorgegebene Temperatur, die der Produktionstemperatur entspricht, wird durch Umwälzen von zugeführtem Kaltwasser bzw. Warmwasser angesteuert.

In besonderer Ausbildung des Verfahrens wird dabei vorgeschlagen, daß diese sich in Produktion der Werkzeughälften 8, 9 einstellenden Temperaturen von der Steuerung 48 automatisch abgespeichert werden (Erfassung z. B. 15 Minuten nach Produktionsbeginn) und daß dann bei Unterbrechungen oder beim Anfahren der Maschine diese gespeicherte Temperatur von der Steuerung 48 angesteuert wird.

## Patentansprüche

1. Verfahren zum Temperieren der beiden Werkzeughälften (8, 9) eines kombinierten Form/Stanzwerkzeuges zum Tiefziehen einer thermoplastischen Kunststoffolie zu Behältern und zum Ausstanzen dieser Behälter, bei dem beide Werkzeughälften (8, 9) während des Betriebes des Werkzeuges von Kühlwasser in der Weise durchströmt werden, daß die Temperaturen beider Werkzeughälften (8, 9) möglichst gleich oder gezielt unterschiedlich gehalten werden, dadurch gekennzeichnet, daß beim stillstand des Werkzeuges infolge von Pausen oder Störungen, die Kühlwasserzufuhr abgestellt und das in den beiden Werkzeughälften (8, 9) befindliche Kühlwasser zwischen diesen umgepumpt wird.

2. Verfahren nach Anspruch 1 dadurch gekennzeichnet, daß bei diesem Stillstand kurzzeitig Kühlwasser oder Warmwasser beiden Werkzeughälften (8, 9) zugeführt wird, um die Temperatur der beiden Werkzeughälften (8, 9) auf einem vorgegebenen Wert zu halten oder auf diesen zu bringen.

3. Verfahren nach Anspruch 2 dadurch gekennzeichnet, daß dieser Temperaturwert der Betriebstemperatur des Werkzeuges während der Produktion entspricht.

4. Verfahren nach Anspruch 3 dadurch gekennzeichnet, daß dieser Temperaturwert automatisch nach einer bestimmten Produktionszeit das Werkzeug erfaßt und in der Steuerung (48) der Formmaschine abgespeichert wird.

5. Vorrichtung zur Durchführung des Verfahrens nach Anspruch 1, bestehend aus einer Formstation mit einem höhenbeweglichen Tisch zur Aufnahme der einen von zwei werkzeughälften (8, 9) zum Verformen einer thermoplastischen Kunststoffolie zu Behältern und zum Ausstanzen dieser Behälter, mit Leitungen (39, 43, 44) zur Kühlwasserzufuhr zu beiden Werkzeughälften (8, 9) und mit Leitungen zur Kühlwasserableitung sowie einem Absperrventil (41) in einer (39) dieser Leitungen (39, 43, 44), gekennzeichnet durch eine Umwälzpumpe (46) in einer Verbindungsleitung (45) zwischen den beiden Leitungen (43, 44) zur Kühlwasserzufuhr zu den Werkzeughälften (8, 9).

6. Vorrichtung nach Anspruch 5 gekennzeichnet durch eine an den Kühlkreislauf (46, 45, 43, 8, 9, 44, 47) angeschlossene Warmwasserzufuhr-Einrichtung (49).

## Claims

1. Method of cooling the two tool halves (8, 9) of a combined moulding and punching tool for deep-drawing a thermoplastic synthetic material foil into containers and for punching out these containers, in which the two tool halves (8, 9) during operation of the tool are flowed through by cooling water in the manner that the temperatures of the two tool halves (8, 9) are kept the same as possible or differing in targeted manner, characterised in that on standstill of the tool due to pauses or disturbances the cooling water feed is cut off and the cooling water disposed in the two tool halves (8, 9) is pumped around between these.

2. Method according to claim 1, characterised in that in the case of this standstill cooling water or warm water is briefly fed to the two tool halves (8, 9) in order to keep the temperature of the two tool halves (8, 9) at or bring this temperature to a predetermined value.

3. Method according to claim 2, characterised in that this temperature value corresponds to the operating temperature of the tool during the production.

4. Method according to claim 3, characterised in that this temperature value is automatically detected after a specific production time of the tool and stored in the control (48) of the moulding machine.

5. Device for carrying out the method according to claim 1, consisting of a moulding station with a table, which is movable in height, for reception of one of two tool halves (8, 9) for forming a thermoplastic synthetic material foil into containers and for punching out these containers, with ducts (39, 43, 44) for cooling water feed to the two tool halves (8, 9) and with ducts for cooling water discharge as well as a blocking valve (41) in one (39) of these ducts (39, 43, 44), characterised by a circulation pump (46) in a connecting duct (45) between the two ducts (43, 44) for the cooling water feed to the tool halves (8, 9).

6. Device according to claim 5, characterised by a warm water feed equipment (49) connected to the cooling circuit (46, 45, 43, 8, 9, 44, 47).

## Revendications

1. Procédé pour conditionner la température des deux moitiés d'outil (8, 9) d'un outil combiné de formage et de matriçage servant à emboutir profondément une feuille de matière plastique thermoplastique afin de former des récipients et de découper à la matrice ces récipients, procédé grâce auquel les deux moitiés (8, 9) de l'outil, sont parcourues pendant le fonctionnement de l'outil par de l'eau de refroidissement d'une manière telle que les températures sont maintenues aussi égales que possible ou sont maintenues différentes de façon appropriée,
caractérisé en ce que
lors de l'arrêt de l'outil par suite de pause ou de dérangements, l'amenée de l'eau de refroidissement est arrêté et l'on fait circuler au moyen d'une pompe l'eau de refroidissement qui se trouve dans les deux moitiés de l'outil (8,9) entre ces deux moitiés.

2. Procédé selon la revendication 1,
caractérisé en ce que
lors de cet arrêt on amène pendant un bref instant de l'eau de refroidissement ou de l'eau chaude aux deux moitiés de l'outil (8, 9) pour maintenir la température des deux moitiés de l'outil (8, 9) à une valeur prédéfinie ,ou pour la porter à cette valeur.

3. Procédé selon la revendication 2,
caractérisé en ce que
cette valeur de la température correspond à la température de fonctionnement de l'outil pendant la production.

4. Procédé selon la revendication 3,
caractérisé en ce que
cette valeur de la température est détectée automatiquement au bout d'un temps déterminé de production et est mise en mémoire dans la commande (48) de la machine de formage.

5. Dispositif pour la mise en oeuvre du procédé selon la revendication 1, consistant en un poste de formage avec une table mobile en hauteur, qui sert à recevoir l'une des deux moitiés de l'outil (8, 9) pour former une feuille de matière plastique, thermoplastique, et en faire des récipients et pour matricer ces récipients, avec des conduites (39, 43, 44) servant à amener l'eau de refroidissement aux deux moitiés de l'outil (8, 9) et avec des conduites servant à évacuer l'eau de refroidissement ainsi qu'avec une vanne d'arrêt (41) dans l'une de ces conduites (39, 43, 44),
caractérisé par
une pompe de circulation (46) dans une conduite de liaison (45) entre les deux conduites (43, 44) servant à l'amenée de l'eau de refroidissement aux deux moitiés de l'outil (8, 9) .

6. Dispositif selon al revendication 5,
caractérisé par
un dispositif (49) d'amenée d'eau chaude, qui est raccordé au circuit de refroidissement (46, 45, 43, 8, 9, 44, 47).
